(19) **Europäisches Patentamt / European Patent Office / Office européen des brevets**

(11) **EP 4 518 400 A1**

(12) **EUROPEAN PATENT APPLICATION**
published in accordance with Art. 153(4) EPC

(43) Date of publication:
**05.03.2025 Bulletin 2025/10**

(21) Application number: 23758202.8

(22) Date of filing: **19.04.2023**

(51) International Patent Classification (IPC):
*H04W 24/02* (2009.01)     *H04W 24/10* (2009.01)
*G06N 20/00* (2019.01)     *H04W 88/06* (2009.01)
*H04W 88/10* (2009.01)

(52) Cooperative Patent Classification (CPC):
**G06N 20/00; H04W 24/02; H04W 24/10;
H04W 88/06; H04W 88/10**

(86) International application number:
**PCT/KR2023/005274**

(87) International publication number:
**WO 2023/211041 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022  US 202263336290 P**

(71) Applicant: **LG ELECTRONICS, INC.
Seoul 07336 (KR)**

(72) Inventors:
• **PARK, Haewook
  Seoul 06772 (KR)**
• **LEE, Youngdae
  Seoul 06772 (KR)**
• **KIM, Hyungtae
  Seoul 06772 (KR)**
• **KANG, Jiwon
  Seoul 06772 (KR)**
• **BAE, Duckhyun
  Seoul 06772 (KR)**

(74) Representative: **Plasseraud IP
104 Rue de Richelieu
CS92104
75080 Paris Cedex 02 (FR)**

(54) **METHOD AND APPARATUS FOR TRANSMITTING AND RECEIVING SIGNAL IN WIRELESS COMMUNICATION SYSTEM**

(57)     A user equipment (UE) acquires information regarding an artificial intelligence/machine learning (AI/ML) model for wireless communication, performs monitoring for the AI/ML model, determines validity of the AI/ML model based on a result of the monitoring for the AI/ML model and a threshold, and transmits an uplink signal or receives a downlink signal in one of a first mode or a second mode based on the determination of the validity of the AI/ML model or a specific signal indicating an operation mode, and the first mode is a mode for operating based on the AI/ML model and the second mode is a mode for operating not based on the AI/ML model.

FIG. 15

EP 4 518 400 A1

## Description

### TECHNICAL FIELD

The disclosure relates to a wireless communication system, and more particularly, to a method and apparatus for transmitting/receiving an uplink/downlink wireless signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method of efficiently performing wireless signal transmission/reception procedures and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

### TECHNICAL SOLUTION

In an aspect of present disclosure, a method of performing wireless communication by a user equipment (UE) includes acquiring information regarding an artificial intelligence/machine learning (AI/ML) model for wireless communication, performing monitoring for the AI/ML model, determining validity of the AI/ML model based on a result of the monitoring for the AI/ML model and a threshold, and transmitting an uplink signal or receiving a downlink signal in one of a first mode or a second mode based on the determination of the validity of the AI/ML model or a specific signal indicating an operation mode. The first mode is a mode for operating based on the AI/ML model and the second mode is a mode for operating not based on the AI/ML model. The UE transmits the uplink signal or receives the downlink signal in the second mode for operating not based on the AI/ML model, based on determination that the AI/ML model is invalid or the specific signal indicating the second mode.

Information regarding the threshold for determining the validity of the AI/ML model may be received from a base station (BS).

The UE may transmit a report on the result of the monitoring for the AI/ML model or a channel quality report based on the AI/ML model, to a base station (BS). The BS may determine that the AI/ML model is invalid based on the report about the result of the monitoring for the AI/ML model or the channel quality report based on the AI/ML model.

The UE may perform monitoring for the AI/ML model based on a preconfigured monitoring periodicity.

Based on determination that the AI/ML model is invalid, the UE may perform an update procedure of the AI/ML model in the second mode. The update procedure of the AI/ML model may acquire information regarding an updated AI/ML model from a base station (BS).

Various types of thresholds may be considered.

For example, the UE may determine that the AI/ML model is invalid based on that the result of the monitoring for the AI/ML model is less than the threshold.

For example, the UE may determine that the AI/ML model is invalid based on a variance of output of the AI/ML model exceeds the threshold.

For example, the UE may determine that the AI/ML model is invalid based on that channel quality based on the AI/ML model is lower by the threshold than channel quality not based on the AI/ML model.

For example, the threshold may mean a maximum time duration for which the AI/ML model remains valid. The UE may determine that the AI/ML model is invalid based on that a duration of the AI/ML model exceeds the threshold.

In another aspect of the present disclosure, a computer-readable recording medium having recorded thereon a program for executing the aforementioned method, may be provided.

In another aspect of the present disclosure, a user equipment (UE) for performing the aforementioned wireless communication method, may be provided.

In another aspect of the present disclosure a device for controlling a UE for performing the aforementioned wireless communication method, may be provided.

In another aspect of the present disclosure, a method of performing wireless communication in a base station (BS) includes acquiring information regarding an artificial intelligence/machine learning (AI/ML) model for wireless communication with a user equipment (UE), and receiving an uplink signal from the UE or transmitting a downlink signal in one of a first mode or a second mode based on a specific signal indicating validity of the AI/ML model or an operation mode. The validity of the AI/ML model may be determined based on monitoring of the AI/ML model and a threshold. The first mode may be a mode for operating based on the AI/ML model and the second mode may be a mode for operating not based on the AI/ML model. The BS may receive the uplink signal from the UE or transmit the downlink in the second mode for operating not based on the AI/ML model, based on determination that the AI/ML model is invalid or the specific signal indicating the second mode.

In Another aspect of the present disclosure, a base station (BS) for performing the aforementioned wireless communication method, may be provided.

## ADVANTAGEOUS EFFECTS

According to the disclosure, wireless signal transmission and reception may be efficiently performed in a wireless communication system.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink shared channel (PDSCH) and ACK/NACK transmission and reception process.

FIG. 6 illustrates an exemplary physical uplink shared channel (PUSCH) transmission process.

FIG. 7 shows an example of a CSI related procedure.

FIG. 8 is a view for explaining a concept of AI/ML/Deep learning.

FIGS. 9 to 12 show various AI/ML models of deep learning.

FIG. 13 is a view for explaining a framework for 3GPP RAN Intelligence.

FIG. 14 shows an example of a configuration of an antenna port to be used for AI/ML.

FIG. 15 shows an implementation example of a method of transmitting and receiving a signal by a UE according to an embodiment.

FIG. 16 shows an implementation example of a method of transmitting and receiving a signal by a BS according to an embodiment.

FIGs. 17 to 20 illustrate an example of a communication system 1 and wireless devices applied to the disclosure.

FIG. 21 illustrates an exemplary discontinuous reception (DRX) operation applicable to the disclosure.

## MODE FOR DISCLOSURE

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

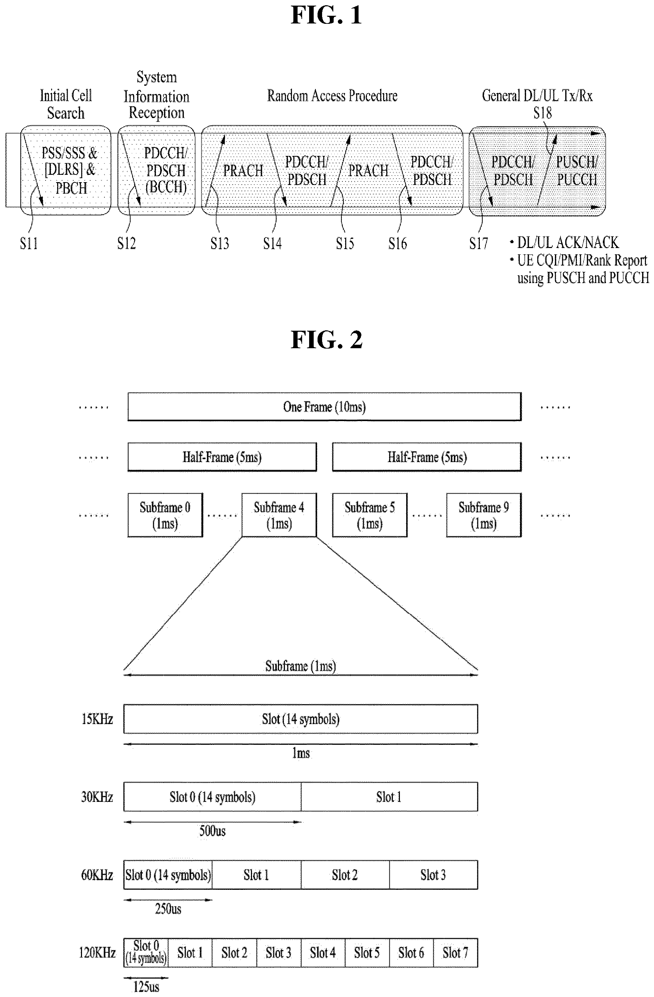

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S 102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S 108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames.

Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

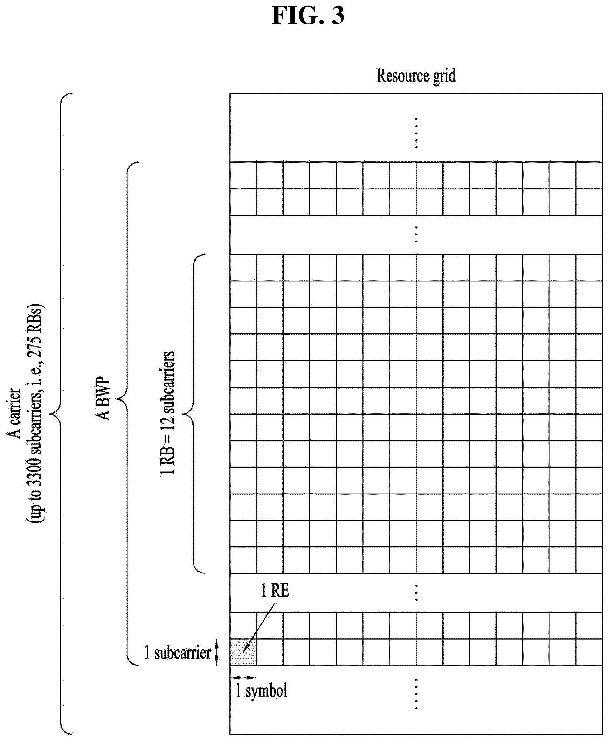

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

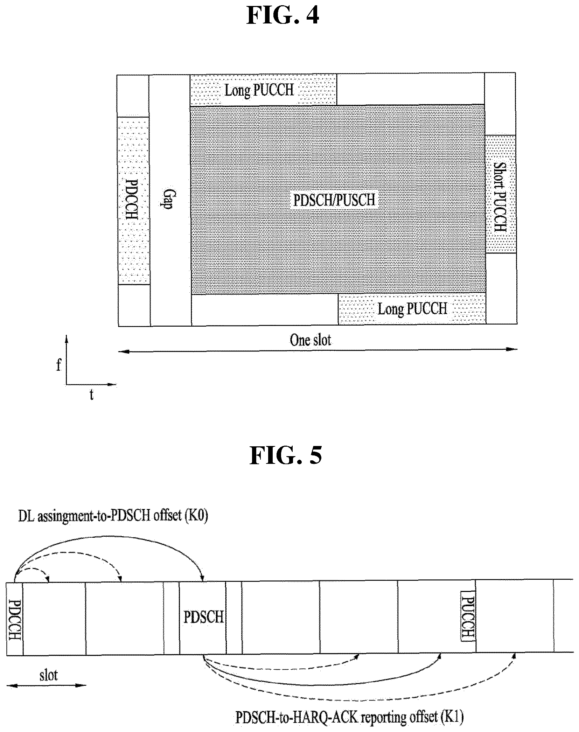

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={ 1, 2, 4, 8, 16}.

\* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|------|--------------|------|----------|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|------------|-------|
| 0_0 | Scheduling of PUSCH in one cell |
| 0_1 | Scheduling of PUSCH in one cell |
| 1_0 | Scheduling of PDSCH in one cell |

(continued)

| DCI format | Usage |
|---|---|
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR(Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |

(continued)

| PUCCH format | Length in OFDM symbols $N_{symb}^{PUCCH}$ | Number of bits | Usage | Etc |
|---|---|---|---|---|
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

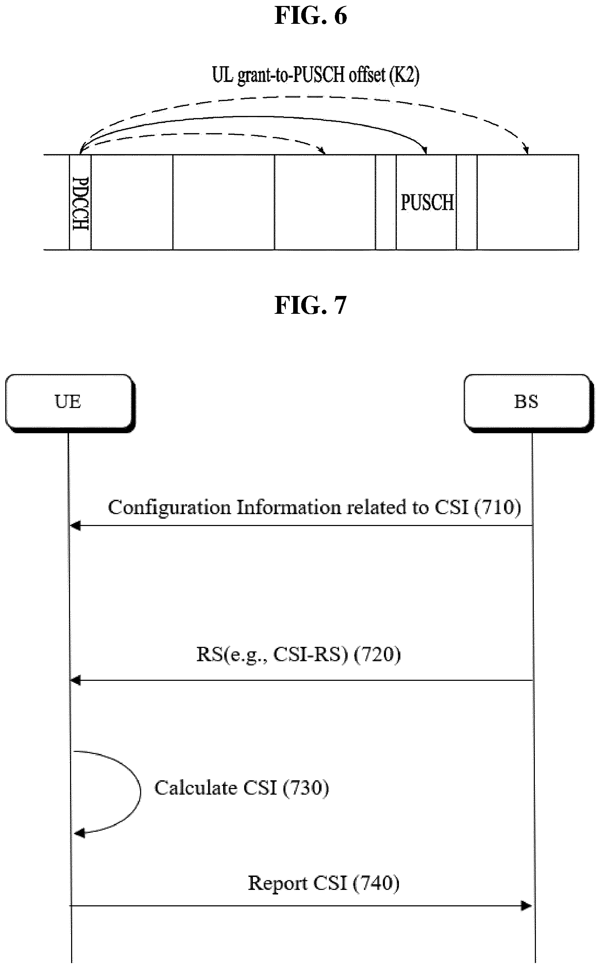

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semipersistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semipersistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semipersistent or aperiodic. The periodic CSI report may be transmitted on a PUCCH. The semipersistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP(semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of TCI-state configurations may be configured in the UE through a higher layer parameter PDSCH-Config. Each TCI-state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

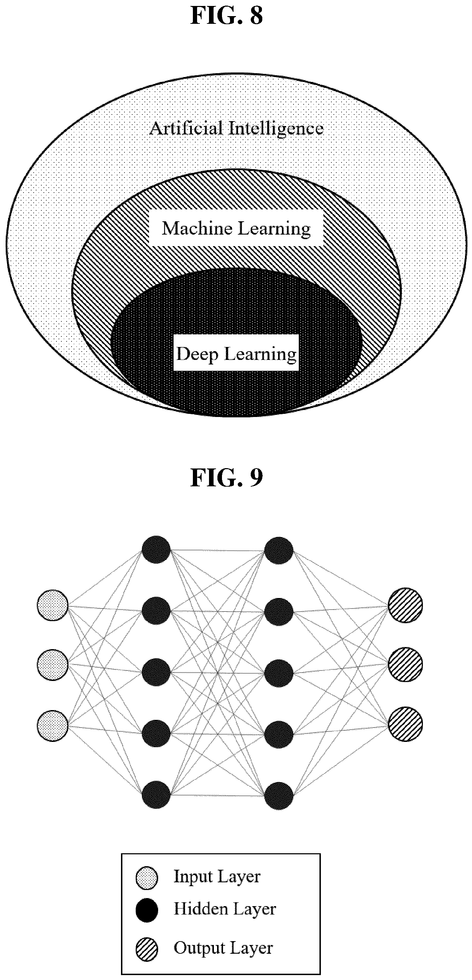

In a narrow sense, AI/ML may be easily referred to as deep learning-based artificial intelligence, but is conceptually shown in FIG. 8.

- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

<u>Classification of types of AI/ML</u> <u>according to various references</u>

1. Offline vs Online

(1) Offline Learning: This complies with a sequential procedure of database collection, learning, and prediction. In other words, collection and learning are performed offline, and the completed program may be installed in the field and used for prediction. In most situations, this offline learning method is used.
(2) Online Learning: Online learning is a method of improving performance little by little by incrementally learning with additionally generated data based on the fact that data to be used for learning is continuously generated recently through the Internet.

2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.
(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.
(3) Distributed Learning: The machine learning process represents a concept that is scaled and deployed across a cluster of nodes. A training AI/ML model is split and shared across multiple nodes operating concurrently to speed up AI/ML model training.

3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.
(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.
(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

<u>AI/ML</u> <u>models</u>

FIG. 9 shows an example of a feed-forward neural network (FFNN) AI/ML model. Referring to FIG. 9, the FFNN AI/ML model includes an input layer, a hidden layer, and an output layer.

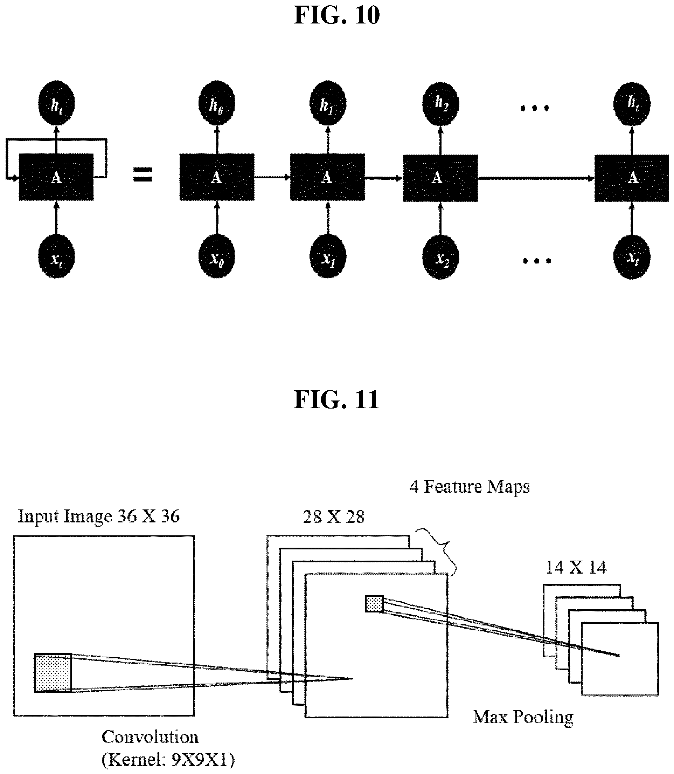

FIG. 10 shows an example of a recurrent neural network (RNN) AI/ML model. Referring to FIG. 10, the RNN AI/ML model is a type of artificial neural network in which a hidden node is connected to a directed edge to form a directed cycle and is an AI/ML model suitable for processing sequentially appearing data such as voice or text. One type of the RNN is a long short-term memory (LSTM), and the LSTM is a structure in which a cell-state is added to a hidden state of the RNN. In detail, in the LSTM, an input gate, a forget gate, and an output gate are added to the RNN cell, and a cell state is added.

FIG. 11 shows a convolution neural network (CNN) AI/ML model. The CNN is used for two purposes including reduction in AI/ML model complexity and extraction of good features by applying convolution computation commonly used in a video processing or image processing field. Referring to FIG. 11, a kernel or a filter means a unit/structure that applies a weight to an input in a specific range/unit. A stride is a movement range in which the kernel is moved within the input. A feature map is the result of applying a kernel to an input. Padding refers to a value added to adjust the size of the feature map. Pooling refers to computation (e.g., max pooling or average pooling) to reduce the size of the feature map by downsampling the feature map.

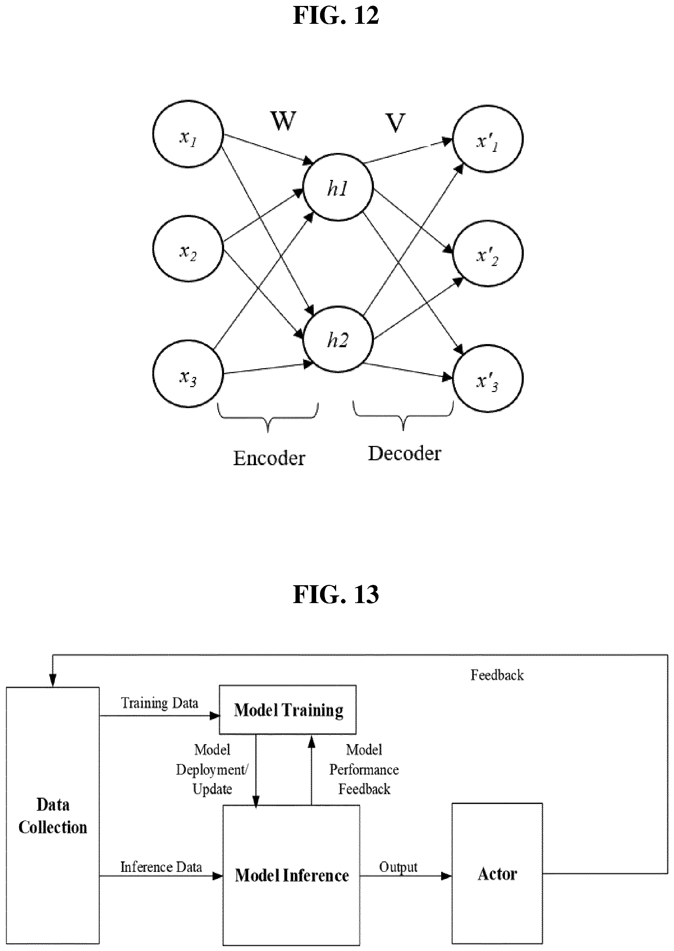

FIG. 12 shows an auto-encoder AI/ML model. Referring to FIG. 12, the auto-encoder is a neural network that receives a feature vector x and outputs the same or similar vector x' and a type of unsupervised learning with input and output nodes having the same feature. A loss function may be represented according to Equation 1 below.

[Equation 1]

$$\arg\min_{W,V}\left\|x - g(f(x))\right\|^2 \ , where \ \mathbf{h} = f(\mathbf{x}) = \mathbf{Wx}, \mathbf{x}' = g(\mathbf{h}) = \mathbf{Vh}$$

FIG. 13 is a diagram for explaining a framework for 3GPP radio access network (RAN) intelligence.

Terms related to AI/ML may be defined as follows (refer to 3GPP TS37.817 document)

- Data collection: Data collected from a network node, a management entity, or a UE is based on ML AI/ML model learning, data analysis and inference.
- ML Model: This is a data driven algorithm by applying machine learning techniques that generates a set of outputs consisting of predicted information, based on a set of inputs.
- ML Training: This is an online or offline process to train an ML model by learning features and patterns that best present data and get the trained ML model for inference.
- ML Inference: This is a process of using a trained ML model to make a prediction or guide the decision based on collected data and ML model.

Referring to FIG. 13, data collection is a function that provides input data to model training and model inference functions. AI/ML algorithm specific data preparation (e.g., data pre-processing and cleaning, formatting, and transformation) is not carried out in the data collection function

Examples of input data may include measurements from UEs or different network entities, feedback from Actor, output from an AI/ML model. Training data is data needed as input for the AI/ML model training function. Inference data is data needed as input for the AI/ML model inference function.

AI/ML model training is a function that performs the ML AI/ML model training, validation, and testing which may generate model performance metrics as part of the model testing procedure. The AI/ML model training function is also responsible for data preparation (e.g., data pre-processing and cleaning, formatting, and transformation) based on training data delivered by a data collection function, if required.

AI/ML model deployment/update: This is used to initially deploy a trained, validated, and tested ai/ml model to the ai/ml model inference function or to deliver an updated model to the model inference function.

Model Inference is a function that provides AI/ML model inference output (e.g., predictions or decisions). Model Inference function may provide model performance feedback to Model Training function when applicable. the model inference function is also responsible for data preparation (e.g., data pre-processing and cleaning, formatting, and transformation) based on inference data delivered by a data collection function, if required. Output means inference output of the AI/ML model produced by a model inference function. AI/ML model performance feedback is used for monitoring the performance of the AI/ML model.

An actor is a function that receives the output from the model inference function and triggers or performs corresponding actions. The actor may trigger actions directed to other entities or to itself. Feedback is information that may be needed to derive training or inference data or performance feedback.

Data set

Data used in AI/ML may include at least one of AI/ML model training data, validation data, and test data.

The AI/ML model training data is a data set for learning an AI/ML model.

The validation data is a data set to verify an AI/ML model that is already been trained. The data may be used to prevent over-fitting of the AI/ML model training data sets. This may be a data set for selecting the best among various AI/ML models learned in the process of learning, and therefore, and thus may be seen as a type of learning.

The test data is a data set for final evaluation and is not related to learning.

For example, the AI/ML model training data and the validation data may be used in a ratio of 8:2 or 7:3, and when the test data is further considered, this may be used in a ratio of 6:2:2 (training: validation: test).

Collaboration level

For example, a cooperation level (or category) may be defined as follows depending on whether the AI/ML function between the BS and the UE is possible, and modification due to the combination or separation of the following levels may be possible.

Cat 0a) No collaboration framework: AI/ML algorithms are purely implemented but do not require air-interface changes.

Cat 0b) A modified air-interface is provided to more efficiently implement AL/ML algorithms.

Cat 1) Collaboration between nodes is possible to improve the AL/ML algorithm of each node. The UE may receive or provide help from the BS for training, adaptation, and the like. However, exchange of AI/ML model information between network nodes is not required.

Cat 2) As a joint AI/ML operation between the UE and the BS, instruction/exchange between network nodes are required.

FALLBACK OPERATION FOR AI/ML

In the wireless communication process through the AI/ML model, performance degradation may occur for various reasons. For example, when delay between AI/ML-based offline learning or online learning occurs, when the AI/ML model of the wireless channel used to generate the data applied to learning and the actual wireless channel environment do not match, or an SNR applied to AI/ML model training/AI/ML model inference and an actual SNR do not match, performance degradation may occur, and as a result, the reliability of the AI/ML model may decrease.

Hereinafter, to resolve the problem, a fallback operation when the reliability of the AI/ML model is lowered due to internal/external environmental factors in a wireless communication system using the AI/ML model is proposed.

Proposal 1

The UE may perform a fallback operation in various situations. Here, the fallback operation may mean a legacy operation, not an AI/ML-based UE operation. As a specific example, the fallback operation may mean an operation scheduled with fallback DCI (e.g., DCI format 0_0, 1_0, etc.) like the existing NR, or operation in a default operation mode configured/defined in advance.

The case in which the UE performs the fallback operation may include at least one of the following, but is not limited thereto.

(1) When a value for accuracy determination/reliability determination for the AI/ML model is equal to or less than a certain threshold
Here, a data set (e.g., after_test data set) for determining additional reliability for the final model fit that completes AI/ML model training/AI/ML model inference may be separately obtained, or the BS may newly configure the corresponding data set to the UE.

(2) When a variance of an output value for a use case to which an AI/ML model is applied is output to a specific value or more (e.g., x % of variance)
A specific window/filter for calculating the variance of the output value may be processed by implementation or may be a specific signaling (e.g., window size)/promise in advance for this.

(3) When the UE makes a request for a fallback/default operation or reports entry into a corresponding mode

For the UE to request a fallback/default operation, separate signaling may be introduced, or the UE may implicitly report (fallback/default operation) based on existing signaling.

As an example of reusing existing signaling, reporting on CQI may be considered. For example, when a CQI value is reported to be less than or equal to a specific value, the BS may consider that the UE implicitly reports the fallback/default operation. Here, the specific CQI value may include CQI index 0 and/or out of range, or at least one of these.

(4) When a value of output (e.g., CQI or PMI) differs by more than a certain value by comparing the case of operating in the legacy mode of the UE and the case of operating in the AI/ML-based mode

A period in which the UE needs to compare the legacy mode and the AI/ML-based mode may be indicated by the BS or a specific long period may be configured in the UE.

Based on the operation of comparing the legacy mode and the AI/ML-based mode by the UE, the UE may report only the best CSI to the BS, but may also report a mode to which the CSI is related, to the BS.

As a modified example of the above example, the legacy mode-based result value and the AI/ML mode-based result value may be simultaneously reported/instructed.

Whether to support the above content (whether legacy and AI/ML operate simultaneously) may be configured based on the capabilities of the UE.

(5) When the MCS configuration of the BS is configured to a specific value or less
(6) When the AI/ML validity timer/window operated by configuration of the BS/UE expires

In the above examples, a specific value/threshold may be configured/defined in advance or configured by the BS.

The validity timer/window/duration is a value configured to determine the validation of an AI/ML model of a UE/BS or the like, and a timer may be (re)started after a specific offset X time based on a signaling timing (e.g., slot n) indicated by the corresponding value. Here, a value of X may be in units of slots or units of msec, and may include X=0. Alternatively, a reference point in time using a time stamp for a start point may be indicated. When a value for the validity duration is configured in advance, especially when the UE is equipped with AI/ML, the UE may report information about the start/re-start of the corresponding validity timer to the BS. When AI/ML is applied in a system with a large RTT, such as NTN, a specific offset (Y) may be be added at the start/restart time of the validity timer to compensate for the RTT.

The instruction for start/restart of the validity timer may be considered as an instruction for AI/ML model update. For example, when the UE is equipped with AI/ML, if the validity duration is (newly) indicated, it may be recognized and operate as an update operation for the AI/ML model. Therefore, along with the validity duration indication, information on AI/ML model update may also be indicated. The information on AI/ML model update may include information on model variable/parameterization. Alternatively, the instruction for updating the AI/ML model may be an instruction for start/re-start of the validity timer. For example, when the UE operates with AI/ML and AI/ML model update is instructed, the UE updates the AI/ML model according to the preconfigured update application time, and the validity timer may be started/re-started.

In the case of validity duration, it may be understood as a lifecycle of an AI/ML model, and the corresponding lifecycle may include all or some of AI/ML model training, model deployment, AI/ML model inference, AI/ML model monitoring, and model updating. The following AI/ML model training and the AI/ML model inference may comply with the following definition.

- AI/ML model training: This may mean a function that performs AI/ML model training, validation, and/or testing. In many cases, AI/ML model training may be performed by one entity, for example, a BS or a UE, but AI/ML model training results may be shared with other entities. For example, the BS may have a training function and the BS may share training results with the UE (e.g., deploy/update AI/ML model of UE).
- AI/ML model inference: This may mean a function of performing AI/ML model inference output (e.g., predictions or decisions). AI/ML model inference may be performed by one entity or by both the UE and the BS. Considering joint AI/ML in which AI/ML model training is performed by one entity but the results are shared by other entities, both the UE and the BS may have an AI/ML model inference function.

AI/ML model monitoring may be a part for validation of the AI/ML model, and may be to determine a need for update or termination. When it is determined necessary based on AI/ML model monitoring, AI/ML model update may be performed, and AI/ML model update may include some or all of information such as an AI/ML architecture, a parameterization, and a size.

During the AI/ML model update process (including AI/ML model training/AI/ML model inference), a restriction window or the like may be configured to prevent the UE from using a previous AI/ML model. During the restriction window, a fallback (or default) operation may be configured. Alternatively, during the restriction window, the UE operates based on the previous AI/ML model, and may operate as a new AI/ML model at the end of the AI/ML model update. When the restriction window is configured together while the AI/ML validity timer is operating together, a method of forcibly terminating the timer (expire) may also be considered.

As a method for informing the UE of the update of the AI/ML model, the NDI in the DCI may be reused, or if there is a version number of the AI/ML model, this may be signaled to inform the update of the AI/ML model.

An update value for AI/ML model update may be configured/instructed based on RRC/MAC-CE/DCI.

It is necessary to define the default (fallback) mode shown in proposal 1. For example, it may be assumed that the AI/ML model is used for CSI feedback enhancement, and an example of the use is as follows.

(i) A method of configuring an AI/ML-based codebook and improving the granularity performance thereof may be used. For example, within the same payload, a codebook more suitable for the environment of the UE is configured based on AI/ML, or the UE reports the existing predefined codebook in an existing method, interprets the report using the AI/ML of the BS, and decode a channel using the improved method.

(ii) To reduce the CSI payload, the UE may compress the feedback information based on the AI/ML and transmit the information to the BS. In this case, the UE/BS may participate in the AI/ML-based operation. Feedback information may include raw channel or PMI of existing CSI (e.g., type I/II CSI), SINR, and the like.

(iii) The UE may report information predicted based on the AI/ML. Here, a type of prediction may be extended and applied to the time/frequency/spatial domain.

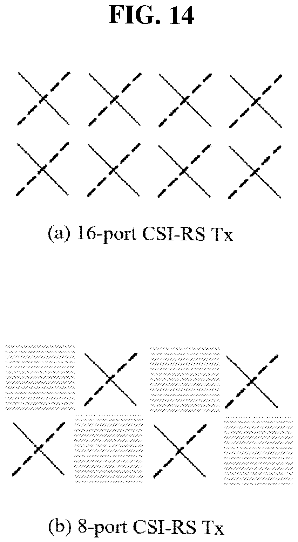

- Time domain: This may be used to predict future CSI based on the AI/ML.
- Frequency domain: For example, to obtain similar performance as configured to density 1 or 2 based on less CSI-RS density (e.g., CSI-RS is placed sparsely on the frequency axis than the existing CSI-RS configuration, e.g., density 0.25), channel estimation may be performed based on AI/ML.
- Spatial domain: As shown in FIG. 14, in (b), fewer CSI-RS ports (e.g., 8 ports) are used than (a) 16 port CSI-RS, and in this regard, to obtain a channel measurement effect equivalent to (a) 16 port CSI-RS, AI/ML-based channel estimation may be performed for (b).

The following may be considered for the default mode for the above CSI feedback. For example, type I CSI and/or WB CSI/CSI quantity = {RI, CQI, PMI}, and payload may also be preconfigured. Alternatively, fallback and non-fallback may be distinguished through a 1-bit flag.

To reduce a blind detection burden of the BS due to the feedback payload size mismatch according to a fallback (default)/non-fallback mode, the UE may be configured to perform a fallback (default) operation only according to a specific reporting period. For example, when periodic/semi-persistent CSI reporting is performed for 5 ms, the BS may configure the UE to perform a fallback (default) mode CSI report every specific 20 ms.

Proposal 1-1

Apart from the method of performing the fallback/default operation in Proposal 1, the UE may drop all AI/ML-based output reports. In addition, the UE may report incompatibility of the AI/ML model (UE AI/ML or UE/BS joint AI/ML), or the BS may indicate the incompatibility of the AI/ML model to the UE (BS AI/ML).

A report on the incompatibility of the AI/ML model may use existing signaling. For example, as an example of reporting the incompatibility of the AI/ML model through the CSI report, the CQI value is reported to a specific value or less (here, the CQI index 0, and out of range may also be included or may be limited to the case where the above value is reported).

Alternatively, the UE may determine the preferred MCS based on AI/ML and report the determination to the BS. For example, in the case of +2, it may be understood as requesting the BS to configure a value raised by an index of 2 compared to the previously configured MCS. Reporting the preferred MCS by the UE may be regarded as an AI/ML model update request, or the UE may drop the AI/ML-based CSI report and instead report only information on the preferred MCS.

Alternatively, the UE may report the calculated compressed CSI without changes, but may additionally report corrected values such as SNR/CQI differential values (for BS AI/ML).

In addition, (in the case of joint AI/UE AI), the UE may additionally report the AI/ML model tuning value to the BS.

Proposal 2

In terms of a network side, when the UE operates as AI/ML or joint AI/ML, it is necessary to have a method for checking mismatch of the AI/ML model. To this end, the following is proposed.

As a method of checking the mismatch of the AI/ML model in the BS, the BS may configure the UE to report information on mismatch in periodic/semi-periodic/aperiodic.

In the case of proposal 2, information on mismatch may include CQI only, SINR only, and/or delta MCS report. Information on mismatch may be configured separately from AI/ML-based CSI report. A non-periodic method, e.g., an event triggered method, may be considered. For example, when the BS lowers a specific threshold and CQI/SNR/SINR is lower than a specific threshold, the UE requests AI/ML model tuning to the BS and/or may report a parameter for AI/ML model tuning.

Proposal 3

To support UE mobility, AI/ML model information exchange between BSs (e.g., BS AI/ML or joint AI/ML case) may be considered.

For example, for reducing latency, BS AI/ML or joint AI/ML model information (AI/ML architecture, model parameters, or the like) may be provided as information for target cells related to Handover and RRM. When an AI/ML Model number (e.g., type or parameter) is defined, this AI/ML model number may be delivered. To this end, it is possible to consider introduction of CSI-RS-Resource-Mobility-AI/ML model training/AI/ML model inference for pre-training purposes and AI/ML model inference, and the UE also uses the measurement result of the target cell. (for AI/ML model training/fine tuning purposes) may be reported.

The above proposal 1, proposal 1-1, proposal 2 and proposal 3 may be applied/implemented alone, but the present disclosure is not limited thereto and may be applied/executed in combination of two or more proposals.

As described above, when a network/BS with AI/ML technology or a network/BS with advanced performance (through other methods) is implemented, dynamic optimization interference/traffic for real-time cooperation and/or integrated control between BSs may be performed, and in this specification, a resource control and CSI-related signaling method suitable for this is proposed. Although the above description is given based on the 3GPP NR system, this is not a limitation and proposals may be applied to other communication systems.

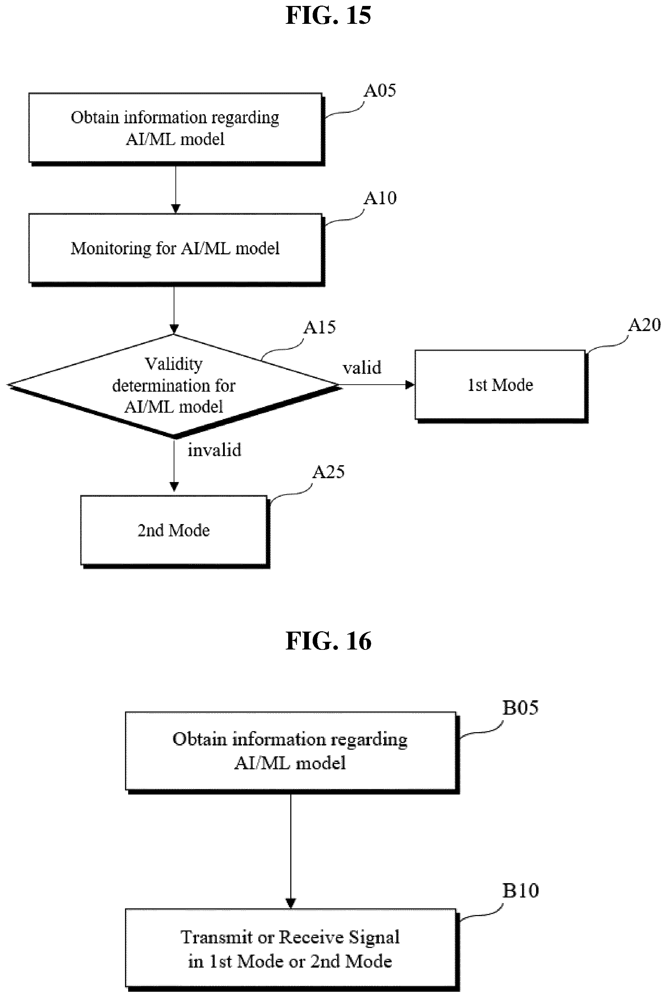

FIG. 15 shows an implementation example of a method of transmitting and receiving a signal by a UE according to an embodiment.

The UE may acquire information regarding an artificial intelligence/machine learning (AI/ML) model for wireless communication (A05).

The UE may perform monitoring for the AI/ML model (A10).

The UE may determine validity of the AI/ML model based on the monitoring result and the threshold for the AI/ML model (A15).

The UE may transmit an uplink signal or receive a downlink signal in any one of a first mode and a second mode based on a specific signal indicating determination of validity of the AI/ML model or an operation mode. A specific signal may be received from the BS. The first mode may be a mode for operating based on the AI/ML model, and the second mode may be a mode for operating not based on the AI/ML model.

Based on determination that the AI/ML model is valid, the UE may transmit the uplink signal or receive the downlink signal in the first mode for operating based on the AI/ML model (A20).

Based on determination that the AI/ML model is invalid or the specific signal indicates the second mode, the UE may transmit the uplink signal or receive the downlink signal in the second mode for operating not based on the AI/ML model (A25).

Information regarding the threshold for determining validity of the AI/ML model may be received from the BS.

The UE may transmit a report on the result of monitoring for the AI/ML model or a channel quality report based on the AI/ML model to the BS. The BS may determine that the AI/ML model is invalid based on a report on the monitoring result for the AI/ML model or a channel quality report based on the AI/ML model.

The UE may perform monitoring for the AI/ML model based on a preconfigured monitoring periodicity.

Based on the determination that the AI/ML model is invalid, the UE may perform an update procedure of the AI/ML model in the second mode. The update procedure of the AI/ML model may include obtaining information regarding the updated AI/ML model from the BS.

At least one of the following various types of thresholds may be considered, but is not limited thereto.

For example, the UE may determine that the AI/ML model is invalid based on the fact that the monitoring result for the AI/ML model is less than the threshold.

For example, the UE may determine that the AI/ML model is invalid based on the fact that the variance of the output of the AI/ML model exceeds the threshold.

For example, based on the fact that the channel quality based on the AI/ML model is lower by the threshold than the channel quality not based on the AI/ML model, the UE may determine that the AI/ML model is invalid.

For example, the threshold may denote the maximum time duration for which the AI/ML model remains valid. Based on the duration of the AI/ML model exceeding the threshold, the UE may determine that the AI/ML model is invalid.

FIG. 16 shows an implementation example of a method of transmitting and receiving a signal by a BS according to an embodiment.

The BS may obtain information regarding an artificial intelligence/machine learning (AI/ML) model for wireless communication with the UE (B05).

The BS may receive an uplink signal from the UE or transmit a downlink signal from the UE in any one of the first mode or the second mode based on a specific signal indicating validity of the AI/ML model or an operation mode (B 10). A specific signal indicating the operation mode may be transmitted from the BS to the UE.

The first mode may be a mode for operating based on the AI/ML model, and the second mode may be a mode for operating not based on the AI/ML model. The BS receives the uplink signal from the UE or transmits the uplink signal in the second mode for operating not based on the AI/ML model, based on determination that the AI/ML model is invalid or the specific signal indicates the second mode.

Validity of the AI/ML model may be determined (by a UE and/or a BS) based on monitoring and thresholds for the AI/ML model.

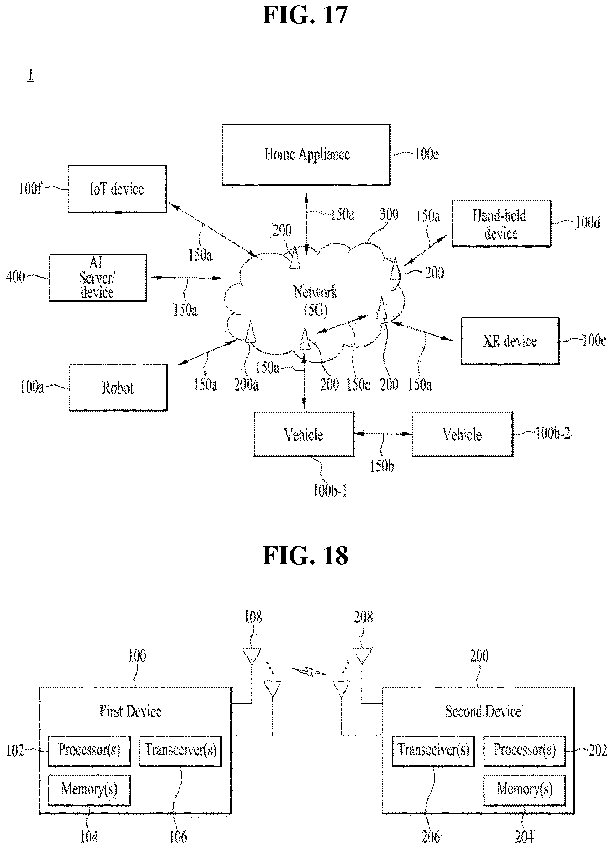

FIG. 17 illustrates a communication system 1 applied to the disclosure.

Referring to FIG. 17, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

FIG. 18 illustrates wireless devices applicable to the disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

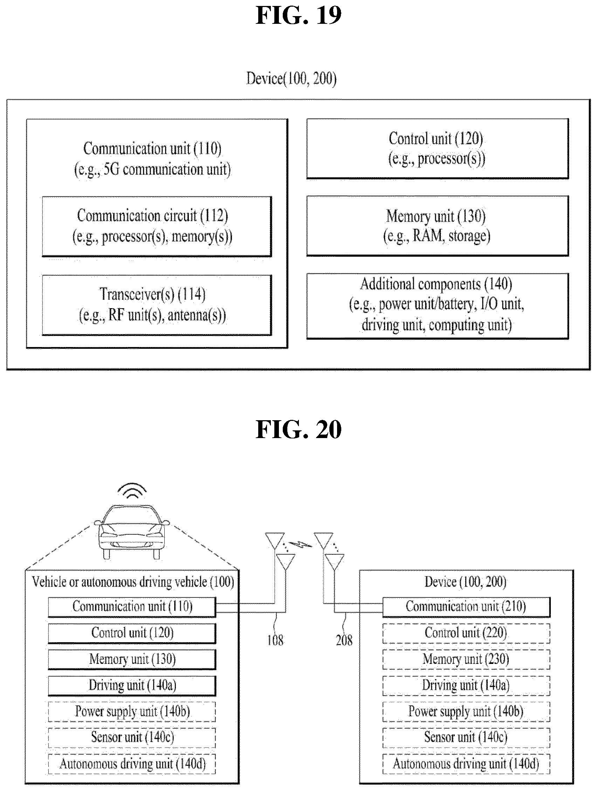

FIG. 19 illustrates another example of a wireless device applied to the disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates another example of a wireless device applied to the disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

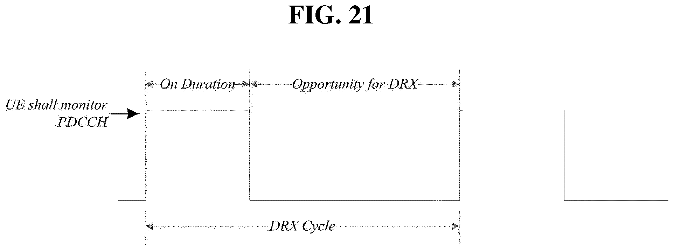

FIG. 21 is a diagram illustrating a DRX operation of a UE according to an embodiment of the disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 21, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the disclosure. Irrespective of whether DRX is configured, PDCCH monitoring may be restricted during a time period configured as a measurement gap.

Table 6 describes a DRX operation of a UE (in the RRC_CONNECTED state). Referring to Table 6, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the aforedescribed/proposed procedures and/or methods.

[Table 6]

|  | Type of signals | UE procedure |
|---|---|---|
| 1st step | RRC signalling (MAC-CellGroupConfig) | - Receive DRX configuration information |

(continued)

|  | Type of signals | UE procedure |
|---|---|---|
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The disclosure is applicable to UEs, BSs, or other apparatuses in a wireless mobile communication system.

**Claims**

1. A method of performing wireless communication by a user equipment (UE), the method comprising:

acquiring information regarding an artificial intelligence/machine learning (AI/ML) model for wireless communication;
performing monitoring for the AI/ML model;
determining validity of the AI/ML model based on a result of the monitoring for the AI/ML model and a threshold; and
transmitting an uplink signal or receiving a downlink signal in one of a first mode or a second mode based on the determination of the validity of the AI/ML model or a specific signal indicating an operation mode,
wherein the first mode is a mode for operating based on the AI/ML model, and the second mode is a mode for operating not based on the AI/ML model; and
wherein, based on a determination that the AI/ML model is invalid or the specific signal indicating the second mode, the UE transmits the uplink signal or receives the downlink signal in the second mode for operating not based on the AI/ML model.

2. The method of claim 1, wherein the UE determines that the AI/ML model is invalid based on that the result of the monitoring for the AI/ML model is less than the threshold.

3. The method of claim 1, further comprising:
transmitting a report about the result of the monitoring for the AI/ML model or a channel quality report based on the AI/ML model, to a base station (BS).

4. The method of claim 3, wherein the BS determines that the AI/ML model is invalid based on the report about the result of the monitoring for the AI/ML model or the channel quality report based on the AI/ML model.

5. The method of claim 1, further comprising:
receiving information regarding the threshold for determining the validity of the AI/ML model from a base station (BS).

6. The method of claim 1, wherein the UE determines that the AI/ML model is invalid based on a variance of output of the AI/ML model exceeds the threshold.

7. The method of claim 1, wherein the UE determines that the AI/ML model is invalid based on that channel quality based on the AI/ML model is lower by the threshold than channel quality not based on the AI/ML model.

8. The method of claim 1, wherein the UE performs monitoring for the AI/ML model based on a preconfigured monitoring periodicity.

9. The method of claim 1, wherein the threshold denotes a maximum time duration for which the AI/ML model remains valid; and
wherein the UE determines that the AI/ML model is invalid based on that a duration of the AI/ML model exceeds the threshold.

10. The method of claim 1, wherein, based on determination that the AI/ML model is invalid, the UE performs an update procedure of the AI/ML model in the second mode.

11. The method of claim 10, wherein the update procedure of the AI/ML model comprises acquiring information regarding an updated AI/ML model from a base station (BS).

12. A computer-readable recording medium having recorded thereon a program for executing the method of claim 1.

13. A device for wireless communication, the device comprising:

a memory configured to store instructions; and
a processor configured to perform operations by executing the instructions,
wherein the operations of the processor comprise:

acquiring information regarding an artificial intelligence/machine learning (AI/ML) model for wireless communication;
performing monitoring for the AI/ML model;
determining validity of the AI/ML model based on a result of the monitoring for the AI/ML model and a threshold; and
transmitting an uplink signal or receiving a downlink signal in one of a first mode or a second mode based on the determination of the validity of the AI/ML model or a specific signal indicating an operation mode,
wherein the first mode is a mode for operating based on the AI/ML model and the second mode is a mode for operating not based on the AI/ML model, and
wherein, based on determination that the AI/ML model is invalid or the specific signal indicating the second mode, the processor transmits the uplink signal or receives the downlink signal in the second mode for operating not based on the AI/ML model.

14. A method of performing wireless communication in a base station (BS), the method comprising:

acquiring information regarding an artificial intelligence/machine learning (AI/ML) model for wireless communication with a user equipment (UE); and

receiving an uplink signal from the UE or transmitting a downlink signal in one of a first mode or a second mode based on a specific signal indicating validity of the AI/ML model or an operation mode,

wherein the validity of the AI/ML model is determined based on monitoring of the AI/ML model and a threshold, wherein the first mode is a mode for operating based on the AI/ML model and the second mode is a mode for operating not based on the AI/ML model, and

wherein, based on determination that the AI/ML model is invalid or the specific signal indicating the second mode, the BS receives the uplink signal from the UE or transmits the downlink signal in the second mode for operating not based on the AI/ML model.

15. A base station (BS) for wireless communication, the BS comprising:

a transceiver; and

a processor configured to control the transceiver to acquire information regarding an artificial intelligence/machine learning (AI/ML) model for wireless communication with a user equipment (UE) and to receive an uplink signal from the UE or transmit a downlink signal in one of a first mode or a second mode based on a specific signal indicating validity of the AI/ML model or an operation mode,

wherein the validity of the AI/ML model is determined based on monitoring of the AI/ML model and a threshold, wherein the first mode is a mode for operating based on the AI/ML model and the second mode is a mode for operating not based on the AI/ML model, and

wherein, based on determination that the AI/ML model is invalid or the specific signal indicating the second mode, the processor receives the uplink signal from the UE or transmits the downlink signal in the second mode for operating not based on the AI/ML model.

# FIG. 1

| Initial Cell Search | System Information Reception | Random Access Procedure | General DL/UL Tx/Rx S18 |
|---|---|---|---|

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11  S12  S13  S14  S15  S16  S17

• DL/UL ACK/NACK
• UE CQI/PMI/Rank Report using PUSCH and PUCCH

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz

| Slot (14 symbols) |
|---|

1ms

30KHz

| Slot 0 (14 symbols) | Slot 1 |
|---|---|

500us

60KHz

| Slot 0 (14 symbols) | Slot 1 | Slot 2 | Slot 3 |
|---|---|---|---|

250us

120KHz

| Slot 0 (14 symbols) | Slot 1 | Slot 2 | Slot 3 | Slot 4 | Slot 5 | Slot 6 | Slot 7 |
|---|---|---|---|---|---|---|---|

125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

One slot

# FIG. 5

DL assingment-to-PDSCH offset (K0)

PDSCH-to-HARQ-ACK reporting offset (K1)

# FIG. 6

UL grant-to-PUSCH offset (K2)

# FIG. 7

# FIG. 8

Artificial Intelligence

Machine Learning

Deep Learning

# FIG. 9

| | Input Layer |
| | Hidden Layer |
| | Output Layer |

# FIG. 10

# FIG. 11

4 Feature Maps

Input Image 36 X 36    28 X 28

14 X 14

Convolution
(Kernel: 9X9X1)

Max Pooling

# FIG. 12

Encoder    Decoder

# FIG. 13

# FIG. 14

(a) 16-port CSI-RS Tx

(b) 8-port CSI-RS Tx

## FIG. 15

```
                    A05
Obtain information regarding
        AI/ML model

                    A10
   Monitoring for AI/ML model

                    A15                      A20
        Validity          valid
    determination for  ───────────▶      1st Mode
       AI/ML model

           invalid
                    A25
        2nd Mode
```

## FIG. 16

```
                    B05
Obtain information regarding
        AI/ML model

                    B10
   Transmit or Receive Signal
     in 1st Mode or 2nd Mode
```

# FIG. 17

1

# FIG. 18

# FIG. 19

Device(100, 200)

- Communication unit (110)
(e.g., 5G communication unit)
  - Communication circuit (112)
(e.g., processor(s), memory(s))
  - Transceiver(s) (114)
(e.g., RF unit(s), antenna(s))
- Control unit (120)
(e.g., processor(s))
- Memory unit (130)
(e.g., RAM, storage)
- Additional components (140)
(e.g., power unit/battery, I/O unit, driving unit, computing unit)

# FIG. 20

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

# FIG. 21

## INTERNATIONAL SEARCH REPORT

| International application No. |
| --- |
| **PCT/KR2023/005274** |

### A. CLASSIFICATION OF SUBJECT MATTER

**H04W 24/02**(2009.01)i; **H04W 24/10**(2009.01)i; **G06N 20/00**(2019.01)i; **H04W 88/06**(2009.01)i; **H04W 88/10**(2009.01)i

According to International Patent Classification (IPC) or to both national classification and IPC

### B. FIELDS SEARCHED

Minimum documentation searched (classification system followed by classification symbols)

H04W 24/02(2009.01); G06N 20/00(2019.01); H04B 7/0426(2017.01); H04B 7/06(2006.01); H04W 24/08(2009.01); H04W 8/22(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: artificial intelligence/machine learning(AI/ML), model, monitor, threshold, validity, timer, window, duration

### C. DOCUMENTS CONSIDERED TO BE RELEVANT

| Category* | Citation of document, with indication, where appropriate, of the relevant passages | Relevant to claim No. |
| --- | --- | --- |
| A | US 2022-0116764 A1 (QUALCOMM INCORPORED) 14 April 2022 (2022-04-14)<br>See paragraphs [0110]-[0111]; and figure 8. | 1-15 |
| A | US 2021-0345134 A1 (TELEFONAKTIEBOLAGET LM ERICSSON (PUBL)) 04 November 2021 (2021-11-04)<br>See paragraphs [0215]-[0222]; and figure 6. | 1-15 |
| A | US 2021-0328630 A1 (QUALCOMM INCORPORED) 21 October 2021 (2021-10-21)<br>See paragraphs [0188]-[0242]; and figures 14-21. | 1-15 |
| A | 3GPP TS 28.105 V1.1.0. 3GPP; TSG SA; Management orchestration; AI/ML management (Release 17). 22 April 2022.<br>See section 6. | 1-15 |
| A | ERICSSON. AI/ML Load Balancing and Mobility Optimisation use cases. R3-222102, 3GPP TSG-RAN WG3 Meeting #115-e. [Online]. 10 February 2022.<br>See section 3. | 1-15 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **03 August 2023** | **03 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | International application No. |
|---|---|---|
| Information on patent family members | | **PCT/KR2023/005274** |

| Patent document cited in search report | | | Publication date (day/month/year) | Patent family member(s) | | | Publication date (day/month/year) |
|---|---|---|---|---|---|---|---|
| US | 2022-0116764 | A1 | 14 April 2022 | WO | 2022-076863 | A1 | 14 April 2022 |
| US | 2021-0345134 | A1 | 04 November 2021 | WO | 2020-080989 | A1 | 23 April 2020 |
| US | 2021-0328630 | A1 | 21 October 2021 | CN | 115398820 | A | 25 November 2022 |
| | | | | EP | 4136591 | A1 | 22 February 2023 |
| | | | | US | 11424791 | B2 | 23 August 2022 |
| | | | | WO | 2021-211703 | A1 | 21 October 2021 |

Form PCT/ISA/210 (patent family annex) (July 2022)